# EUROPEAN PATENT APPLICATION

(11) **EP 1 600 559 A1**
(43) Date of publication of application: **30.11.2005**
(21) Application number: 04076541.4
(22) Date of filing: 26.05.2004
(51) Int. Cl.: E01F 9/00, G02B 6/00, G08G 1/09

(54) **Carriageway-marking device and system**

(71) Applicant: 3M Innovative Properties Company, St. Paul, Minnesota 55144-1000 (US)
(72) Inventor: Pesenti, Marcella, c/o 3M Europe s.a., 1831 Diegem (BE)
(74) Representative: Riccardi, Elisa

(57) **Abstract**

A carriageway-marking device (1), comprising: a tubular light pipe (2) having a longitudinally extending light output window (5a) and a light extractor means (6); and a light projector (3) coupled to a first end of said light pipe (2) for projecting light thereinto, characterized in that said light projector (2) comprises a plurality of LEDs (9).

## Description

The present invention relates to a carriageway-marking device and system.

The edges of a carriageway are commonly marked, in addition to lines on the roadway, by a series of interspaced retro-reflective elements, typically white on the vehicle off side and red on the vehicle near side. The performance of such elements is poor because they only become visible when struck by the light of the incoming vehicle. This might happen too late in case of high speed, sharp curves, hills and similar. In case of low visibility, especially due to fog, the performance may become extremely poor.

Lighting devices are also employed sometimes, such as at deviations or dangerous bends. They normally include a row of individual lamps, that may be continuously lit or flashed in series. In either case, the individual lamps may only provide a non-continuous marking. Moreover, since the lights need to be mounted at a height comparable to the head of the driver, when the vehicle passes nearby each lamp, he/she suffers glare or, at least, is disturbed by the intense light.

A light pipe carriageway-marking system is also known (see e.g. **WO 95/30218** and the prior art referred to thereby), comprising a plurality of light pipes extending alongside the road, each provided with one discharge or halogen lamp and an associated yellow filter at one end or at both ends thereof. The light from the lamp, after passing through the filter, illuminates the light pipe walls while traveling along the light pipe. The light pipe is therefore yellow illuminated, thus highly visible even in fog conditions.

Nevertheless, there are still opportunities for improvement in the field of lighting carriageway-marking devices. For example, it would be desirable to provide an illuminated carriageway-marking device that can function without the need for a high tension power supply and requires less maintenance than the currently-known devices, thereby enabling costs and traffic disruption to be reduced. It would also be desirable to be able to vary the light output of an illuminated carriageway-marking device, for example to take account of the visibility conditions or so that the device can function also as a signaling device.

The present invention relates to a carriageway-marking device, comprising: a tubular light pipe having a longitudinally extending light output window and a light extractor means; and a light projector coupled to a first end of said light pipe for projecting light thereinto, characterized in that said light projector comprises a plurality of Light Emitting Diodes (LEDs).

Use of LEDs as the light source provides for low voltage power supply, long lifetime, low service and maintenance of the carriageway-marking device and system.

By providing for a plurality of LEDs, not all of which need to be illuminated at once, light of different intensity may be provided, as best suited for the visibility conditions. Also, LEDs providing light of different colors may be used, thus making the carriageway-marking device also useful as a signaling device.

Moreover, the use of LED technology allows for remote control and surveillance of the light projector.

The light output window preferably extends 180° circumferentially around the light pipe, and is centered about a plane deviating downwards from the horizontal, so as to be orientable towards the carriageway edge.

The light is preferably emitted from the output window at an angle not greater than 30° with respect to the longitudinal axis of the light pipe. Such angle range allows high visibility of the marking device, while avoiding direct glare in the eyes of the driver from the immediately adjacent length of the marking device.

Each of the LEDs is preferably provided with an associated parabolic reflector to improve lighting control of the device.

The above and further features and advantages of the present invention will become clearer from the following description, made with reference to an embodiment shown in the attached drawings, wherein:

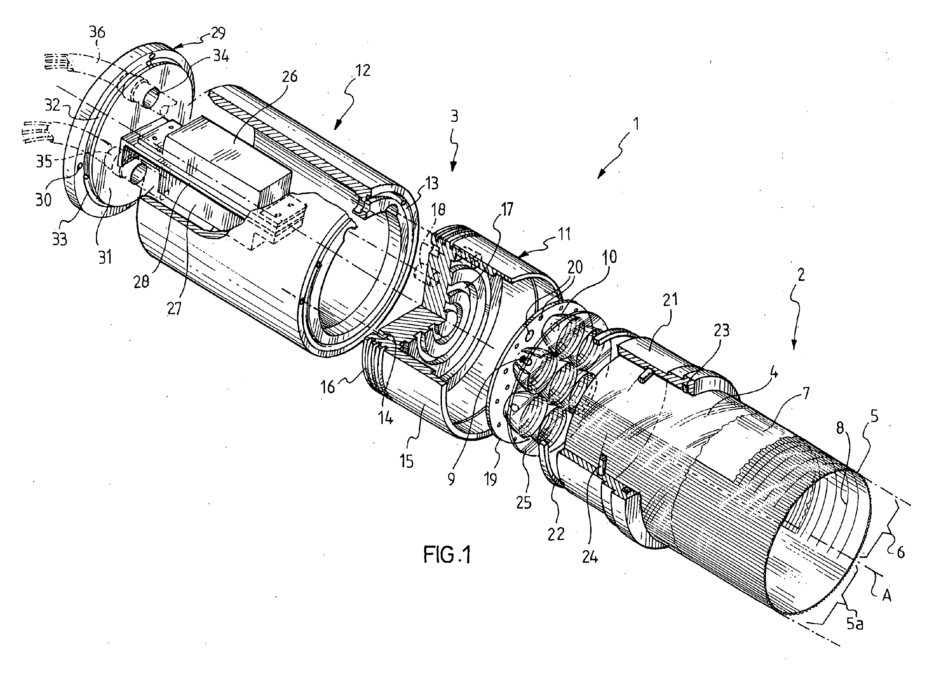

- Fig. 1 is an exploded perspective view of a carriageway-marking device according to the invention,

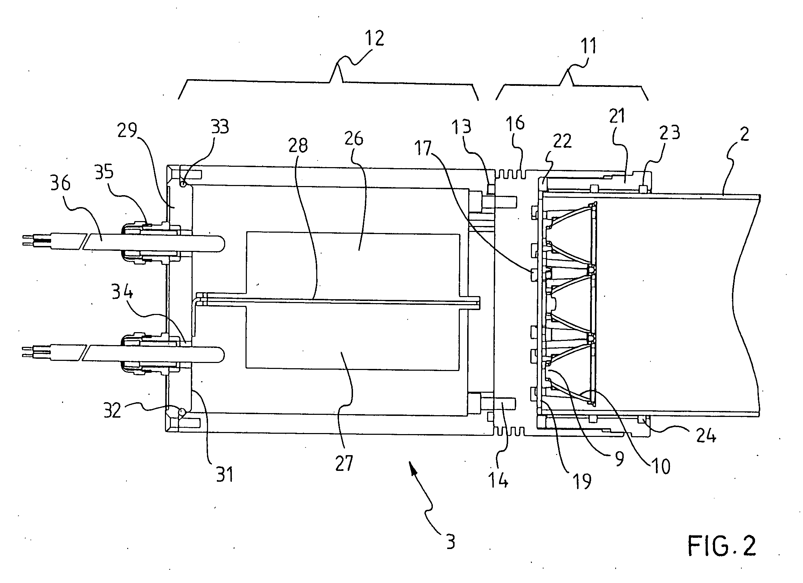

- Fig. 2 is a longitudinal section of part of the device of Fig. 1,
- Fig. 3 shows, in an end view, the preferred arrangement of a plurality of LEDs in the device of Fig. 1, and
- Fig. 4 is a perspective view of a carriageway-marking system according to the invention.

In the figures, a carriageway-marking device 1 is shown, that generally comprises a tubular light pipe 2 and a light projector 3 at one end of light pipe 2.

In a manner per se known, light pipe 2 comprises a supporting transparent material 4, shaped into a tubular form.

The supporting transparent material 4 is selected to be flexible enough so as to allow bending according to radiuses of curvature as are typical of roads. A coextruded polycarbonate and acrylic material is a suitable supporting transparent material because it has a suitable life of at least ten years, and a suitable strength. The supporting transparent material 4 is also preferably UV-resistant.

The supporting transparent material 4 is lined with a micro-structured transparent material 5. The micro-structured transparent material 5 is more specifically arranged with its micro-structures extending longitudinally and facing outwards.

A particularly suited micro-structured transparent material 5 is that commercially available as Scotch™ Optical Lighting Film 2301 from 3M Company of St. Paul, Minnesota, USA.

A circumferential portion 6 of light pipe 2, referred to herein as light extractor portion, is made partly specularly reflective and partly diffusively reflective, so that the angles of light rays impinging thereupon are partly deviated to a direction allowing them to be emitted from the remaining circumferential portion of light pipe 2, referred to herein as light output window 5a.

In the embodiment shown, this is accomplished by a masking 7 sandwiched between the supporting transparent material 4 and the micro-structured transparent material 5 at the light extractor portion 6.

The masking 7 may be either a mirror film, or a white film, according to the length of the light pipe 2. As will be appreciated by those skilled in the art, in a comparatively long light pipe 2, the light guiding requirement will prevail and thus a mirror film will be desirable, while in a comparatively short light pipe 2, the light diffusing requirement will prevail and thus a white film will be desirable.

Moreover, the internal smooth face of micro-structured transparent material 5 bears, at the light extractor portion 6, a plurality of diffusely reflective elements, e.g. silk-screen printed white paint dots.

The diffusely reflective elements more specifically comprise a plurality of rows 8 of dots extending transversally to the longitudinal axis A of light pipe 2, less spaced apart going from the light input end of the light pipe 2 (that is the end that is coupled to light projector 3), towards its center.

More particularly, the predetermined configuration of diffusely reflective elements 8 is obtained by applying the principles disclosed in **WO 02/23084.**

In an alternative embodiment (not shown), the micro-structured transparent material 5 may only be provided at the light output window 5a, while providing at the light extractor portion 6, a sheet of dot printed 3M™ Radiant Mirror Film available from 3M Company of St. Paul, Minnesota, USA laminated onto the transparent supporting material 4.

Each of light output window 5a and light extractor portion 6 preferably extends 180° in cross-section. More precisely, the light output window 5a is centered about a plane deviating 45° downwards from a horizontal plane when the carriageway-marking device 1 is its mounted condition. The light exiting the light pipe 2 from light output window 5a is thus conveniently directed towards the carriageway edge, thus improving the efficiency of the carriageway-marking device.

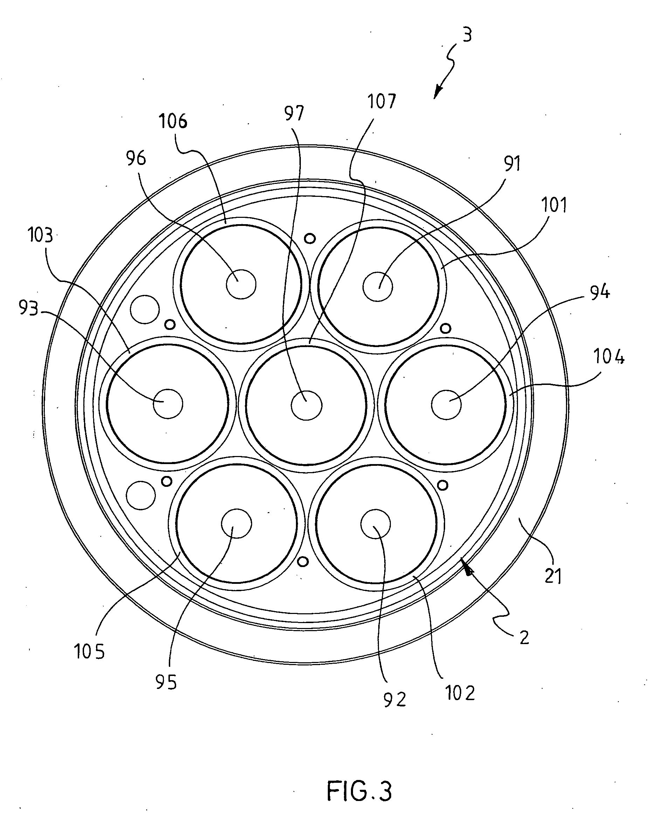

Turning now to light projector 3, it comprises a plurality of LEDs 9. Seven LEDs, labelled as 91-97 in figure 3, are shown in the figures, arranged at the corners and center of a (virtual) hexagon.

Three of the LEDs arranged at the corners are red LEDs 91-93, while the remaining LEDs at the corners and the central LED are green LEDs 94-97. More in particular, the LEDs at the corners 91-96 of the hexagon are alternately green and red ones.

Each LED 91-97 is placed at the focus of a respective parabolic reflector 10 (labelled as 101-107 in figure 3). Each parabolic reflector 10 has a longitudinal axis parallel to the longitudinal axis A of the light pipe 2.

Each parabolic reflector 10 is sized so that the light beam from the respective LED 9 forms a cone (more precisely, a frustum of a cone) having an aperture of 30°. That is, the light cone from each LED/reflector assembly 9,10 is directed into the light pipe 2 under angles within 0° and 15° with respect to the longitudinal axis A of the light pipe 2 and thus with respect to the walls of the light pipe 2.

The LEDs 9 and their respective parabolic reflectors 10 are housed within an optics body portion 11 of the light projector 3, in turn coupled with a power supply/control electronics body portion 12 of the light projector 3 with interposition of a gasket 13, ensuring tightness against entry of moisture, water, and dirt that could damage the LEDs 9.

Coupling of optics body portion 11 and supply/control body portion 12 may be accomplished through screws (not shown) threaded into bores 14, but any fastening means, such as a press-fit or an adhesive, can be used instead.

Optics body portion 11 comprises a cup-shaped member 15, provided with heat exchange fins 16 at its bottom periphery. The internal bottom of cup-shaped member 15 is provided with a series of annular grooves 17, also for heat exchange, and with a pair of through holes 18 for passing the wires (not shown) into the supply/control body portion 12.

Optics body portion 11 further comprises an aluminum LED holder plate 19, to which LEDs 9 and their associated parabolic reflectors 10 are attached, e.g. by gluing as shown, by screws, or similar. LED holder plate 19 is further provided with a plurality of holes 20 for passing the wires (not shown) for inter-connection of the electric pins of the LEDs 9, as better specified hereinafter.

A collar 21 fits into cup-shaped member 15, with interposition of a rectangular-section silicon gasket 22 at the bottom of the collar 21.

The internal surface of collar 21 has a pair of ring shaped grooves 23 for receiving a pair of O-rings 24.

When collar 21 is slid onto light pipe 2 and within cup-shaped member 15, O-rings 24 create a suitable mechanical hold on the light pipe 2, and further provide for suitable tightness against entry of moisture, water, and dirt into the optics body portion 11.

Finally, a circular glass 25 is shown placed on top of the parabolic reflectors 10.

As mentioned, the LEDs 9 are electrically connected with each other and with supply/control body portion 12. More specifically, the three red LEDs 91-93 are electrically connected in parallel and to a first power and drive unit 26, and the four green LEDs 94-97 are electrically connected in parallel and to a second power and drive unit 27.

Each power and drive unit 26, 27 may comprise a microchip suitable for providing a feedback about the proper operation and instantaneous output of the LEDs it is connected with.

As an alternative, a single power and drive unit may be used, provided with suitable switching means for separately controlling the two sets of colored LEDs 91-93, 94-97. It is however to be noted that the two low wattage power and drive units 26, 27 will have a longer average life than a comparatively high wattage single power and drive unit.

Power and drive units 26, 27 are fastened to an L-shaped metal or insulating sheet 28 that is in turn fastened, such as screwed or glued, to a removable cap 29 of supply/control body portion 12. Cap 29 is secured to supply/control body portion 12 e.g. by screws (not shown) threaded into holes 30 of cap 29 and corresponding holes (not shown) of supply/control body portion 12. Power and drive units 26, 27 are thus housed within the cylindrical cavity of supply/control body portion 12. Supply/control body portion 12 is sized with respect to power and drive units 26, 27 so as to ensure proper heat dissipation.

Cap 29 is more precisely provided with a central projection 31 whose edge forms a groove 32 for receiving an O-ring 33 for tightness of supply/control body portion 12. A pair of through holes 34 fitted with wire-holders 35 is provided into cap 29 for passing tri-filament electric wires 36 for power supply and earth connection of power and drive units 26, 27.

A further through hole (not shown) may be provided for passing a signal cable to a remote unit for controlling the light projector 3.

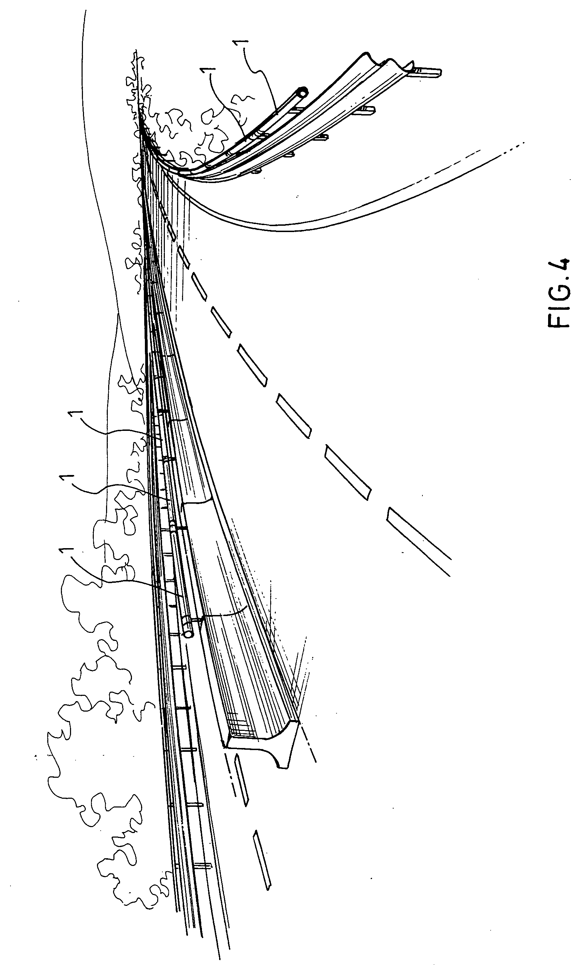

As shown in Fig. 4, a plurality of carriageway-marking devices 1 are fastened, closely spaced, to a guard-rail of a road by any suitable means, thus forming a carriageway-marking system according to the invention.

The operation of the carriageway-marking device 1 of the invention will be easily appreciated by those skilled in the art. The light from the light projector 3 is guided along light pipe 2 and emitted through its output window 5a.

More in particular, by proper design of the light pipe 2 and the light projector 3 -that is, the arrangement of LEDs 9 and geometry of reflectors 10-, the light from LEDs 9 is emitted through the output window 5a under an acute angle with respect to the longitudinal axis A of light pipe 2. The preferred emission acute angle is of 30°, that is the light is emitted from parallel to the light pipe 2 up to 30° skewed outwards of it.

An acute angle of light emission is particularly suitable for carriageway-marking purposes. Indeed, the light is directed towards the driver and skewed towards the edge of the carriageway. Thus, the carriageway-marking device 1 forms a continuous highly visible line (as opposed to small spots of retro-reflective markers) and effectively illuminates the carriageway edge with high visibility in any weather condition, in particular the device is able to "cut" through fog.

Moreover, by avoiding emission at 90° with the longitudinal axis A of light pipe 2, direct glare into the eyes of the driver from the immediately adjacent light pipe portion is avoided.

No light is wasted towards the sky, both thanks to the acute angle of light emission and to the light extractor portion 6. The device has thus a high luminous efficiency, fairly higher also than the known light pipe carriageway marking system referred to above, that used high wattage light sources and had no control of the light output angle, thus having a reduced luminous efficiency.

By providing for red and green LEDs as shown, it is possible to easily obtain light of three colors:
- red light, when only the first power and drive unit 26 is powered;
- green light, when only the second power and drive unit 27 is powered;
- yellow light, when both the first and the second power and drive units 26, 27 are powered.

Red, green and yellow have precise and worldwide meaning in traffic control, respectively of forbidding, allowing and alerting. Thus, the carriageway-marking device 1 may be further used as a signaling device.

To this end, it is very advantageous when the light projector, and in particular its power and drive units 26, 27, are remotely controlled. Remote control may be accomplished by wired or wireless connection of the carriageway-marking device 1 (and preferably all such devices 1 extending along a given road or road network as shown in Fig. 4) to a control station. Such a station will be for example located at a police station, at a fire-station, at superhighway tollbooths and so on.

Moreover, the mutual arrangement of the LEDs 9 as shown is such that the light cones from individual LEDs 9 are slightly overlapped before entry into the light pipe 2, so that the colors will effectively combine into yellow before striking the walls 5, 6 of the light pipe 2. While this provision is not strictly necessary, it makes it easier to design the carriageway-marking device 1 and especially its light extractor portion 6 to obtain the desired light exit angle.

In a first alternative embodiment, each of the plurality of LEDs 9 is an RGB LED, capable of providing light of a full range of colors. In addition to red, green and yellow light, white light may be thus easily obtained, e.g. for use as a marker on the left side of carriageway, as requested by many traffic standards. It will be understood that the two power and drive units 26, 27 will then be replaced by a single one.

In a second alternative embodiment, the plurality of LEDs 9 comprises at least one LED for each of a primary color of a set of primary colors, e.g. red-green-blue, cyan-magenta-yellow. Again, by suitably mixing the power of the various LEDs, any visible color, including white, may be obtained. It is to be noted that, although using cyan-magenta-yellow pure white may not be obtained, still a suitably light yellow may. It will be understood that in this case, the two power and drive units 26, 27 shown in the figures will be replaced by a plurality of power and drive units, providing for control of the LEDs of individual colors, or again by a single power and drive unit having suitable switching means.

More in general, it will be manifest that the number of monochromatic or multi-chip LEDs may differ from seven, according to the required colors, the power output of each color, as well as the size and shape of the light pipe 2.

When red LEDs and green LEDs are used, to obtain the best hue of red, green and yellow light, the green LEDs should outnumber the red LEDs by one. Three or five LEDs might be too few to properly cover the entire cross-section of light pipe 2, while more than seven LEDs would increase the power consumption.

When a plurality of carriageway-marking devices 1 are arranged into a system, they may be commonly controlled, or each of them may be independently controlled. It is thus possible to easily implement e.g. waves of lights switching on in a repetitive sequence, so as to further improve visibility of highly dangerous bends, entry into tunnels and so on.

The light pipe may have a diameter of a few centimeters, and a length of a few meters. In order to obtain enough luminosity, a light projector identical to light projector 3 may be placed at the second end of light pipe 2 for lengths of 4 meters and higher.

The cross-section of the carriageway-marking device 1 may depart from being circular as shown, e.g. it may be elliptical, rectangular or of other shapes. However, a circular cross-section easily allows a packed arrangement of the LEDs so as to obtain a uniform illumination of the entire cross-section of the light pipe 2.

When the carriageway-marking device 1 is used at a traffic divider for both carriageways, the light output window 5a may extend more than 180° and be centered about the vertical.

Luminosity at 1 meter of prototypes of the invention, each provided with four green LEDs and three red LEDs, each having a nominal power of 1 W (1,2 W as measured) was measured. The various LEDs were those having a hexagonal PCB available from Lumileds Lighting, LLC of San Jose, CA, U.S.A., under the designation "Luxeon Star ". The diameter of the light pipe 2 was of 110 mm. The results are as set in the table below.

| Length of light pipe (meters) | Number of projectors | Luminosity at 1 meter (lux/square meter) | | |
|---|---|---|---|---|
| | | Yellow light | Red light | Green light |
| 2 | 1 | 3 | 4 | 3.5 |
| 3 | 1 | 2 | 2.6 | 2.3 |
| 4 | 2 | 12 | 15.6 | 14 |

| Length of light pipe (meters) | Number of projectors | Luminosity at 1 meter (lux/square meter) | | |
|---|---|---|---|---|
| | | Yellow light | Red light | Green light |
| 5 | 2 | 9 | 11.7 | 10.5 |
| 6 | 2 | 6 | 8 | 7 |

It will be seen from the above data that the carriageway-marking device and system of the invention provides fairly high luminosity.

In particular, the devices having two projectors provide enough luminosity for road use under the European standard, that requires at least 5 lux at 1 meter from the light source. It will be recognized that a length of the light pipe 2 of 6 meters will be preferred, because fewer devices will be required in a system as that shown in fig. 4.

Shorter devices may however be useful for some applications. Moreover, by increasing the nominal power of the LEDs, e.g. by using 3 W LEDs, luminosity above 5 lux is expected even with a single projector 3 for various lengths of the light pipe 2.

## Claims

1. A carriageway-marking device (1), comprising: a tubular light pipe (2) having a longitudinally extending light output window (5a) and a light extractor means (6); and a light projector (3) coupled to a first end of said light pipe (2) for projecting light thereinto, **characterized in that** said light projector (2) comprises a plurality of LEDs (9).

2. The device according to claim 1, wherein said light output window (5a) extends 180° circumferentially around the light pipe (2).

3. The device according to claim 1, wherein said light output window (5a) is centered about a plane deviating downwards from a horizontal plane.

4. The device according to claim 3, wherein the downwards deviation is of 45°.

5. The device according to claim 1, wherein the light output from said light output window (5a) forms an angle not greater than 30° with respect to the longitudinal axis (A) of the light pipe (2).

6. The device according to claim 1, wherein said plurality of LEDs (9) are capable of emitting at least two different colors.

7. The device according to claim 6, wherein said plurality of LEDs (9) are monochromatic LEDs of at least two different colors.

8. The device according to claim 7, wherein said plurality of LEDs (9) comprises red LEDs (91-93) and green LEDs (94-97).

9. The device according to claim 7, **characterized in that** each LED (9) or group of LEDs (91-93; 94-97) of one color is controlled (26; 27) independently of each LED (9) or group of LEDs (94-97; 91-93) of another color.

10. The device according to claim 1, **characterized in that** said plurality of LED sources (8) comprises seven LEDs (91-97) arranged at the center and angles of a virtual regular hexagon.

11. The device according to claim 10, **characterized in that** the six LEDs arranged at the angles of the virtual regular hexagon are alternately red LEDs (91-93) and green LEDs (94-96), the LED arranged at the center of a virtual regular hexagon being a green LED (97).

12. The device according to claim 6, wherein said plurality of LEDs (9) are RGB LEDs.

13. The device according to claim 1, **characterized in that** each of said LEDs (9) is provided with an associated parabolic reflector (10).

14. The device according to claim 13, **characterized in that** each of said reflectors (10) is designed so that the light cone from each LED/reflector assembly has an aperture angle of 30°, the axis of each reflector (10) being parallel to a longitudinal axis (A) of the light pipe (2).

15. The device according to claim 1, wherein said light pipe comprises a supporting transparent material (4).

16. The device according to claim 15, wherein said supporting transparent material (4) is internally lined, at least at said output window (5a), with a micro-structured transparent material (5).

17. The device according to claim 16, wherein a masking (7) selected from specularly reflective and diffusively reflecting is arranged at a light extractor portion (6) other than said light output window (5a).

18. The device according to claim 16, wherein the internal smooth face of said micro-structured transparent material (5) bears, at a light extractor portion (6) other than said light output window (5a), a diffusively reflective pattern (8).

19. The device according to claim 16, wherein said supporting transparent material (4) is internally lined, at a light extractor portion (6) other than said light output window (5a), with a specularly reflective film, having a diffusively reflective pattern.

20. The device according to claim 18 or 19, wherein said diffusively reflective pattern (8) comprises rows (8) of diffusively reflecting dots extending transversally to a longitudinal axis (A) of the light pipe (2), said rows (8) being less spaced apart going from said first end of the light pipe (2) towards its center.

21. The device according to claim 1, further comprising a second light projector at a second end of said light pipe (2).

22. Carriageway-marking system comprising a plurality of carriageway-marking devices according to any of claims 1-21, arranged in a line.
